# EUROPEAN PATENT SPECIFICATION

(11) **EP 1 623 428 B1**
(45) Date of publication and mention of the grant of the patent: **11.07.2007**
(21) Application number: 04752261.0
(22) Date of filing: 13.05.2004
(51) Int. Cl.: G11B 33/04

(54) **BOOK-LIKE STACKED ARRAY WITH COVER**
DECKE FÜR BUCHÄHNLICHE, STAPELFÖRMIGE ANORDNUNG
SYSTEME D'ELEMENTS DE RANGEMENT EMPILES DE TYPE LIVRE

(30) Priority: 13.05.2003 US 470509 P
(43) Date of publication of application: 08.02.2006
(60) Divisional application: 07010791.7
(73) Proprietor: MeadWestvaco Corporation, Glen Allen VA 23060 (US); Gelardi, John A., Kennebunkport,ME 04046 (US)
(72) Inventor: Gelardi, John A., Kennebunkport, ME 04046 (US); EXNER, Dana, Chicago, IL 60634 (US); LADWIG, David, P., Chicago, IL 60622 (US); Prewett, Andrew, Ruscmbe, Berkshire RG10 9LF (GB)
(74) Representative: Hepworth, John Malcolm
(86) International application number: PCT/US2004/015201
(87) International publication number: WO 2004/102573

(56) References cited:
- WO-A-03/050812
- US-A- 4 823 950
- US-B1- 6 360 890

## Description

### BACKGROUND OF THE INVENTION

The invention relates to stacked arrays of article trays, and more particularly to a hinged stacked array of article trays having a cover with offset attachment to the stack.

Manufactures often desire to package articles that they sell in packages that contain multiples of the article. Often, the package for containing multiples of the article may be used as a permanent storage device for reusable articles.

Trays are often used as storage mechanisms for disc-shaped articles such as compact discs (CD's), digital versatile discs (DVD's) and similarly shaped disc-like information storage mediums. A useful configuration for packaging multiple disc-shaped articles is a stacked array of trays. In such a stacked array, the trays are often hinged to one another for ease in accessing individual trays while maintaining the ability to easily restack. A cover is frequently applied to the stacked array for informational and aesthetic purposes. The cover may be applied so that the 25 individual trays of the array may be accessed in book-like fashion.

US 4 823 950 to Roze discloses a storage container for optical discs having a jacket secured to the uppermost and lowermost tray in a stack of trays.

W 03/050812 to Gelardi discloses a stack of trays having a single flexible hinge member affixed to the stack of trays.

US 6, 360, 890 to Proffit discloses a storage book for a plurality of discs having a hinge marker passing through a stack of trays which results in a staggered, partially overlapping opening of the trays.

A problem in using a stacked array of trays with a cover is that when the trays are pivoted from a single stack configuration, stresses are often place upon the cover that cause the cover to pull away from where it is attached to the trays. This tearing away structurally damages the back portion of the cover and is also undesirable aesthetically. This problem occurs because the trays are rigid and have widths that cannot be fully accommodated by the spine portion of the cover.

This problem also arises in other book- like stacked arrays. Thus, it can be appreciated that it would be useful to have a means for covering a stacked array of article trays that does not cause the cover to tear away from the region of connection to the trays.

### SUMMARY OF THE INVENTION

According to a first aspect of the invention, there is provided a package for holding media discs which package comprises a stack of disc-holding trays, each tray in the stack having, of itself, a hinged edge face, and the hinged edge faces of the trays in the stack being aligned with each other, so that all the hinged edge faces of the stack are substantially flush, and a single flexible hinge and connecting member permanently affixed to all the hinged edge faces, the flexible hinge and connecting member being disposed in a plane substantially containing and connecting the flush stack of hinged edge faces, and hinging the trays together one to the next so that they can be fanned out by flexing the flexible hinge and connecting member along planes which pass between each adjacent pair of hinged edge faces, the package having a jacket, for enclosing the stack, the jacket comprising, a front panel, a spine panel, a joint panel and back panel hinged one to the next in series, characterised in that the jacket is attached to the stack such that the flexible hinge and connecting member and a portion of the lowermost disc holding tray are free from connection with the jacket such that fanning the trays by flexing the flexible hinge and connecting member is unhindered by the jacket when the package is opened.

Preferably, the joint panel is hinged to the back panel along a hinge line disposed substantially parallel to and inset from the hinged edge face of the lowermost tray of the stack.

Preferably, the jacket is attached to the stack such that upon opening the package, the opposed outermost trays of the stack, are moveable into a substantially co-planar position.

Preferably the uppermost trays of the opened stack and the panels forming the jacket can be put into a substantially co-planar relationship.

Preferably the jacket is attached to the stack by means of a securing panel, the securing panel being disposed between the lowermost tray and the back panel to provide a connection therebetween.

Preferably the joint panel is free of connection with the securing panel.

Preferably the front and back panels are each formed of two layers of material and the spine and joint panels are each formed of a single layer of material.

Preferably the front and back panels each extend equally with the length of a tray and terminate in the plane of flush edge faces opposed the hinged edge faces of the closed stack of trays.

Preferably an opened position the hinged edge face of each tray can be disposed back-to-back with the hinged edge face of another tray of the stack.

### BRIEF DESCRIPTION OF THE DRAWINGS

Fig. 1 is an isometric illustration of a stacked array of article trays having a cover with offset attachment region, in accordance with a preferred embodiment of the invention.
Fig. 2 is an illustration of the package of Fig. 1 in upright condition showing the individual trays fanned as in a book.
Fig. 3 is an illustration of the package of Fig. 1 in upright condition with the front portion of the cover opened, the spine of the cover pivoted away from the stacked array, and the narrow non-adhered region of the back cover pivoted away from the bottom/base tray.
Fig. 4 is an illustration of the package of Fig. 1 in opened condition wherein some of the trays have been pivoted off of the stack, forming two stacks of approximately equal height.
Fig. 5 is an illustration of the package of Fig. 1 in opened condition wherein substantially all of the trays have been pivoted off of the original stack, leaving only the bottom, or base, tray on the original stack.

### DETAILED DESCRIPTION OF THE INVENTION

Throughout the drawings, the same reference numerals are used to denote the same or like features of the invention.

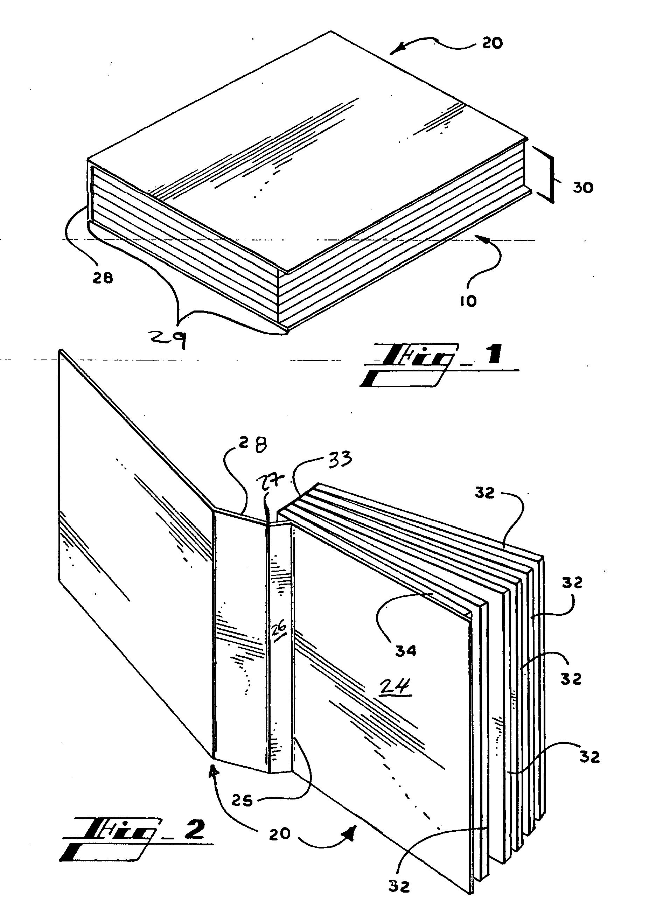

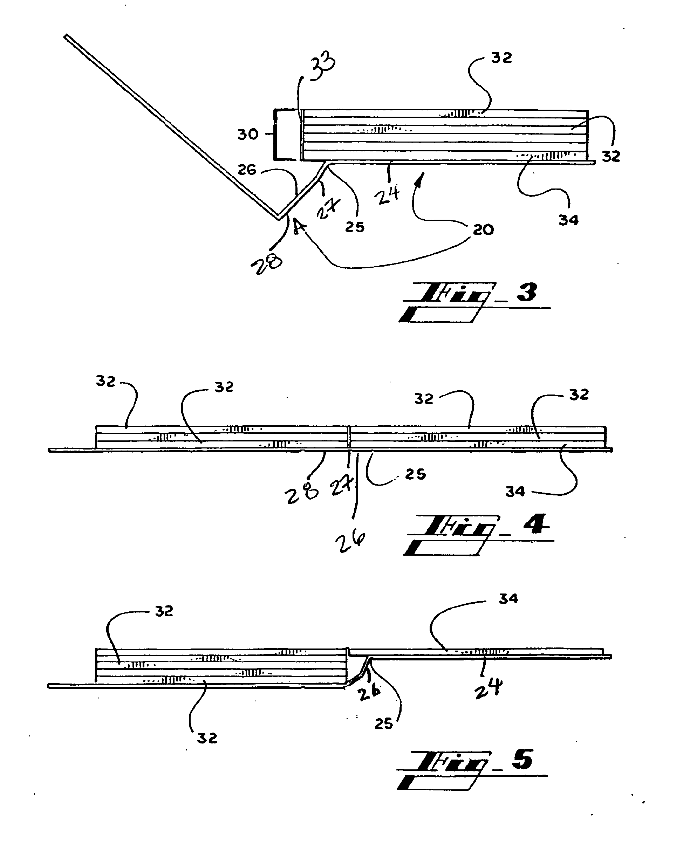

Referring first to Fig. 1, therein is illustrated a package 10 that is a stacked array 30 of trays for articles having a cover 20 in accordance with a preferred embodiment of the invention. Referring now also to Fig. 2, the package 10 of Fig. 1 is shown in upright condition with individual trays 32 joined along a spine 33 partially fanned like the pages of a book about their region of common joinder that is, a spine 33. In Fig. 2, the elements of the cover 20 can be seen. The cover 20 has a front portion and back portion 24/26 joined by a spine 28. The back portion has one portion, a back cover portion, 24 that is affixed by adherence or other means to the bottom, or base, tray 34 of the array 30 of trays, beyond a line of joinder or hinge line 25 that is offset from the line of joinder or hinge line 27 that hingedly adjoins the cover spine 28 to the back cover 24/26. A strip 26 completes the back cover. The strip is shown and noted to be fairly narrow in the preferred embodiment illustrated but the width may vary. The narrower the strip 26, the wider the remainder of the back portion 24 of the cover. The wider the back portion 24 that is adhered to the bottom/base tray, the more firmly affixed is the back portion to the bottom/base tray 34.

In the preferred embodiment, the strip 26 is defined by substantially parallel lines of demarcation, such as fold or score lines. One line of demarcation 25 creates a pivot line that separates the main portion back portion of the cover 24 from the strip 26. The second line of demarcation 27 separates the non-affixed strip 26 of the back portion of the cover 20 from the spine 28.

Referring now to Fig. 3, in another view of the package of Fig. 1 shown in upright condition, from a more top isometric view, the manner in which the cover is offset at the back portion by the strip 26. The strip 26 is shown pivoted away from the array 30 of trays along the line of demarcation (fold line) 25 of the back portion of the cover.

Referring now to Fig. 4, the package of Fig 1 is shown open in the manner of a book with some of the trays 32 pivoted away from the original stack. This illustration demonstrates that package opened to a condition of no more stacks on the open portion than on the original stack where the problem of pressure being exerted against the spine and back portion of the cover has not occurred.

Referring now to Fig. 5, therein is shown the package of Fig. 1 opened to a condition where the stack of trays 32 that have been pivoted away from the original stack (and therefore the bottom/base tray 34) exceeds the number (and therefore height) of trays in the original stack (base tray stack). The manner in which pressure is exerted by the removed stack against the spine and back portion of the cover is shown. The manner in which relief is provided by the offset of the non-adhered strip 26 is also shown. The relief provided by the offset mitigates tearing or other undesirable effects of pressure.

Referring now back to Figs 2, 3, 4 and 5, an optional feature of the invention is illustrated wherein the back portion of the cover is two ply with the main back cover portion 24 and its adjoining strip 26 forming the outer ply and a second panel forming an inner ply that is affixed to the bottom/base tray 34. This configuration provides a panel that is affixed to the bottom/base tray at the greatest number of points, the main portion of the back cover region 24 is firmly affixed to the inner ply and the un-adhered strip provides the offset.

The present invention provides a stacked array of trays for articles having a cover that is placed around the stack in the manner of a book cover. The cover consists of back and front portions connected by a spine. The width of the spine corresponds to the height of the stack of trays. The back portion of the cover is affixed to the back of the bottom tray. However, a region of the back cover adjacent the spine is not adhered to the bottom panel.

Modifications may be made in the foregoing without departing from the scope of the claimed invention. For example, although the preferred embodiment illustrated and described is directed to trays in particular the invention is equally applicable to stacked arrays of other substantially planar or planar-like articles or elements.

The figures forming a part of this specification convey the best mode for carrying out the invention known to the inventor at the time of filing the patent application. The figures are further presented to enable those skilled in the art to make and use the invention. After learning of the details of the invention as presented herein, including the figures, it is likely that alternative embodiments could be devised according to the invention, which have a much different appearance than the embodiments disclosed in the accompanying figures. The figures forming a part of the specification convey utilitarian aspects of the invention and the preferred embodiments, and also include ornamental features which are not necessary to the utilization of the invention.

## Claims

1. A package (10) for holding media discs which package comprises a stack of disc-holding trays (32), each tray in the stack having, of itself, a hinged edge face, and the hinged edge faces of the trays in the stack being aligned with each other, so that all the hinged edge faces of the stack are substantially flush, and a single flexible hinge and connecting member (33) permanently affixed to all the hinged edge faces, the flexible hinge and connecting member being disposed in a plane substantially containing and connecting the flush stack of hinged edge faces, and hinging the trays together one to the next so that they can be fanned out by flexing the flexible hinge and connecting member along planes which pass between each adjacent pair of hinged edge faces, the package having a jacket (20), for enclosing the stack, the jacket comprising a front panel, a spine panel (28), a joint panel (26) and back panel (24) hinged one to the next in series, **characterised in that** the jacket is attached to the stack such that the flexible hinge and connecting member and a portion of the lowermost disc holding tray (34) are free from connection with the jacket such that fanning the trays by flexing the flexible hinge and connecting member is unhindered by the jacket when the package is opened.

2. A package according to claim 1 wherein the joint panel (26) is hinged to the back panel along a hinge line (25) disposed substantially parallel to and inset from the hinged edge face of the lowermost tray of the stack.

3. A package according to either claim 1 or 2 wherein the jacket is attached to the stack such that upon opening the package the opposed outermost trays of the stack, are moveable into a substantially co-planar position.

4. A package according to any of the preceding claims wherein the uppermost trays of the opened stack and the panels forming the jacket can be put into a substantially co-planar relationship.

5. A package according to any preceding claim wherein the jacket is attached to the stack by means of a securing panel, the securing panel being disposed between the lowermost tray and the back panel to provide a connection therebetween.

6. A package according to claim 5 wherein the joint panel is free of connection with the securing panel.

7. A package according to any preceding claim wherein the front and back panels are each formed of two layers of material and the spine and joint panels are each formed of a single layer of material.

8. A package according to any preceding claim wherein the front and back panels each extend equally with the length of a tray and terminate in the plane of flush edge faces opposed the hinged edge faces of the closed stack of trays.

9. A package according to any preceding claim where in an opened position the hinged edge face of each tray can be disposed back-to-back with the hinged edge face of another tray of the stack.

## Patentansprüche

1. Verpackung (10) zum Halten von Medienscheiben, wobei die Verpackung einen Stapel von Scheiben-haltenden Ablagen (32) umfasst, wobei jede Ablage in dem Stapel selbst eine gelenkig angebrachte Kantenseite aufweist, und die gelenkig angebrachten Kantenseiten der Ablagen in dem Stapel miteinander ausgerichtet sind, so dass alle gelenkig angebrachten Kantenseiten des Stapels im Wesentlichen bündig sind, sowie ein einzelnes biegsames Gelenk- und Verbindungselement (33), das permanent an alle gelenkig angebrachten Kantenseiten befestigt ist, wobei das biegsame Gelenk- und Verbindungselement in einer Ebene angeordnet ist, die im Wesentlichen den bündigen Stapel von gelenkig angebrachten Kantenseiten enthält und diesen verbindet, und die Ablagen eine mit der nächsten gelenkig miteinander verbindet, so dass diese ausgefächert werden können, indem das biegsame Gelenk- und Verbindungselement entlang Ebenen gebogen wird, die zwischen jedem benachbarten Paar von gelenkig angebrachten Kantenseiten verlaufen, wobei die Verpackung eine Hülle (20) zum Umschließen des Stapels aufweist, wobei die Hülle eine Vorderwandfläche, eine Rückgratwandfläche (28), eine Verbindungswandfläche (26) und eine Rückwandfläche (24) umfasst, die der Reihe nach eine mit der anderen gelenkig verbunden sind, **dadurch gekennzeichnet, dass** die Hülle derart an den Stapel angebracht ist, so dass das biegsame Gelenk- und Verbindungselement sowie ein Abschnitt der untersten Scheiben-haltenden Ablage (34) keine Verbindung mit der Hülle aufweisen, so dass das Ausfächern der Ablagen durch ein Verbiegen des biegsamen Gelenk- und Verbindungselements durch die Hülle nicht behindert wird, wenn die Verpackung geöffnet wird.

2. Verpackung nach Anspruch 1, wobei die Verbindungswandfläche (26) gelenkig an die Rückwandfläche entlang einer Gelenklinie (25) angebracht ist, die im Wesentlichen parallel zu der gelenkig angebrachten Kantenseite der untersten Ablage des Stapels verläuft und von dieser nach innen versetzt ist.

3. Verpackung nach Anspruch 1 oder 2, wobei die Hülle an den Stapel angebracht ist, so dass beim Öffnen der Verpackung die gegenüberliegenden äußersten Ablagen des Stapels in eine im Wesentlichen co-planare Position bewegt werden können.

4. Verpackung nach einem der vorhergehenden Ansprüche, wobei die obersten Ablagen des geöffneten Stapels und die Wandflächen, die die Hülle ausbilden, in eine im Wesentlichen co-planare Beziehung gebracht werden können.

5. Verpackung nach einem der vorhergehenden Ansprüche, wobei die Hülle mittels einer Befestigungswandfläche an den Stapel angebracht ist, wobei die Befestigungswandfläche zwischen der untersten Ablage und der Rückwandfläche angeordnet ist, um eine Verbindung zwischen diesen bereitzustellen.

6. Verpackung nach Anspruch 5, wobei die Verbindungswandfläche keine Verbindung mit der Befestigungswandfläche aufweist.

7. Verpackung nach einem der vorhergehenden Ansprüche, wobei die Vorder- und Rückwandfläche jeweils aus zwei Materiallagen ausgebildet sind und die Rückgrat- und Verbindungswandfläche jeweils aus einer einzelnen Materiallage ausgebildet sind.

8. Verpackung nach einem der vorhergehenden Ansprüche, wobei die Vorder- und Rückwandfläche sich jeweils gleich mit der Länge einer Ablage erstrecken und in der Ebene der bündigen Kantenseiten enden, die den gelenkig angebrachten Kantenseiten des geschlossenen Stapels von Ablagen gegenüberliegen.

9. Verpackung nach einem der vorhergehenden Ansprüche, wobei in einer geöffneten Position die gelenkig angebrachte Kantenseite von jeder Ablage Rücken an Rücken mit der gelenkig angebrachten Kantenseite einer weiteren Ablage des Stapels angeordnet werden kann.

## Revendications

1. Un emballage (10) pour contenir des disques média, cet emballage comprenant une pile de plateaux porte disques (32), chaque plateau de la pile ayant, en soi-même, une face de bord articulée, et les faces de bord articulées des plateaux de la pile étant alignées entre elles de sorte que toutes les faces de bord articulées de la pile sont substantiellement au même niveau, et une unique articulation et élément de jonction flexible (33) fixée de manière permanente à toutes les faces de bord articulées, l'articulation et élément de jonction flexible étant située sur un plan contenant et reliant substantiellement la pile nivelée de faces de bord articulées, et articulant les plateaux entre eux l'un au suivant de sorte qu'ils puissent être déployés en fléchissant l'articulation et élément de jonction flexible tout le long des plans qui passent entre chaque paire adjacente de faces de bord articulées, l'emballage ayant une pochette (20) pour renfermer la pile, la pochette comprenant un panneau frontal, un panneau dorsal (28), un panneau de jonction (26) et un panneau postérieur (24) articulés l'un au suivant en série, **caractérisé par le fait que** la pochette est attachée à la pile de sorte que l'articulation et élément de jonction flexible et une partie du plateau porte disques inférieur (34) sont libres de connexion avec la pochette de sorte que le déploiement des plateaux en fléchissant l'articulation et élément de jonction flexible n'est pas dérangé par la pochette lorsque l'emballage est ouvert.

2. Un emballage selon la revendication 1 dans lequel le panneau de jonction (26) est articulé au panneau postérieur tout le long d'une ligne d'articulation (25) disposée substantiellement parallèle à, et décalée vers l'intérieur de, la face de bord articulée du plateau inférieur de la pile.

3. Un emballage selon l'une quelconque des revendications 1 ou 2 dans lequel la pochette est attachée à la pile de sorte que, lorsqu'on ouvre l'emballage, les plateaux extérieurs opposés de la pile sont déplaçables à une position substantiellement coplanaire.

4. Un emballage selon l'une quelconque des revendications précédentes dans lequel les plateaux supérieurs de la pile ouverte et les panneaux qui forment la pochette peuvent être portés à une relation substantiellement coplanaire.

5. Un emballage selon l'une quelconque des revendications précédentes dans lequel la pochette est attachée à la pile par le moyen d'un panneau de fixation, le panneau de fixation étant situé entre le plateau inférieur et le panneau postérieur pour créer une connexion entre eux.

6. Un emballage selon la revendication 5 dans lequel le panneau de jonction est libre de connexion avec le panneau de fixation.

7. Un emballage selon l'une quelconque des revendications précédentes dans lequel chacun des panneaux frontal et postérieur est formé de deux couches de matériel et chacun des panneaux dorsal et de jonction est formé d'une unique couche de matériel.

8. Un emballage selon l'une quelconque des revendications précédentes dans lequel chacun des panneaux frontal et postérieur s'étend avec la même longueur qu'un plateau et termine sur le plan des faces de bord qui sont au même niveau à l'opposite des faces de bord articulées de la pile fermée de plateaux.

9. Un emballage selon l'une quelconque des revendications précédentes dans lequel, dans une position ouverte, la face de bord articulée de chaque plateau peut être disposée dos-à-dos avec la face de bord articulée d'un autre plateau de la pile.
